# DEMANDE DE BREVET EUROPEEN

(11) **EP 1 407 698 A1**
(43) Date de publication de la demande: **14.04.2004**
(21) Numéro de dépôt: 03292489.6
(22) Date de dépôt: 08.10.2003
(51) Int. Cl.: A47J 31/40

(54) **Tête de projection d'eau pour machines de distribution de boissons**

(30) Priorité: 08.10.2002 FR 0212503
(71) Demandeur: Jenner, Ernest, 83580 Gassin (FR)
(72) Inventeur: Jenner, Ernest, 83580 Gassin (FR)
(74) Mandataire: Littolff, Denis

(57) **Abrégé**

Machine pour la fabrication de boissons à partir de poudre ou de grains lyophilisés disposés dans le fond d'un gobelet (2) et dilués dans de l'eau projetée par une tête (1) de projection de jets d'eau placée au-dessus du gobelet (2), ladite tête (1) comportant des buses (19, 20, 23, 24, 25) de projection d'eau, étant entraînée en rotation pendant ladite projection, et comportant au moins une buse (19, 23) disposée selon ou à proximité immédiate de l'axe de rotation et au moins une buse (20, 24, 25) excentrée radialement à distance dudit axe.

## Description

La présente invention se situe dans le domaine des machines de distribution de boissons, qui équipent notamment un grand nombre de lieux publics et permettent d'obtenir, en général moyennant paiement, une boisson sélectionnée parmi celles que peut fabriquer la machine.

En l'occurrence, la machine de distribution concernée fonctionne de manière automatisée avec des gobelets pré-dosés non operculés dont le fond est par conséquent tapissé par de la poudre ou des grains lyophilisés qui, mélangés avec de l'eau, donnent la boisson choisie. Elle ne comporte pas de chambre de mixage desdits produits pulvérulents ou granuleux, ce qui supprime la contrainte sanitaire liée au nettoyage de ladite chambre et des tuyauteries qui y sont éventuellement rattachées.

En principe, lorsque l'utilisateur se saisit du verre qu'il a commandé, la boisson est supposée être prête à être bue, c'est-à-dire que les grains ou la poudre doivent avoir été correctement sinon complètement dilués dans le liquide.

La dilution ne se fait cependant pas de la même manière selon les produits lyophilisés ou en poudre utilisés : les grains de café lyophilisés ne réagissent pas de la même manière que la poudre de cacao, dont les caractéristiques de dilution ne sont elles-mêmes pas identiques à celles des soupes lyophilisées, etc...

Ainsi, la poudre de cacao, lorsqu'elle est soumise à une projection d'eau sous pression, tend à former des grumeaux dont la dissolution ne se fait pas toujours de manière satisfaisante, passé le premier jet sous pression et à mesure que le verre se remplit. Pour obtenir que la poudre ou les grains se dissolvent correctement, il faut en effet souvent une action mécanique auxiliaire, consistant par exemple pour l'utilisateur à remuer ultérieurement le liquide à l'aide d'une cuillère ou d'une spatule, et visant à détruire lesdits grumeaux.

En principe, dans de telles machines, cette action mécanique résulte du jet sous pression, dont la pression et le débit doivent alors être maîtrisés pour éviter des effets indésirables tels qu'une mousse trop abondante et peu appétissante.

L'action proprement mécanique dudit jet n'est toutefois réellement efficace que lorsque celui-ci est directement appliqué sur le produit lyophilisé ou sur la poudre, c'est-à-dire dans les premières secondes de la projection du liquide. Après un certain temps, si la dissolution n'a pas eu lieu correctement, l'action mécanique résultant du jet d'eau sous pression est affaiblie voire supprimée par la quantité d'eau déjà versée, car le jet se brise alors sur la surface de l'eau et ne s'applique plus correctement sur les agrégats ou grumeaux non dissous.

Pour pallier cet inconvénient, il a été proposé dans le passé d'améliorer l'action mécanique du jet sous pression en donnant une forme particulière au fond du gobelet, supposée renforcer l'efficacité du jet liquide en améliorant sa dynamique à des fins de dissolution des poudres ou des produits lyophilisés. Ainsi, on connaît des gobelets dont le fond est par exemple doté d'une protubérance centrale sur laquelle vient s'écraser un jet unique en l'occurrence projeté dans l'axe central du gobelet, l'eau s'éparpillant ensuite radialement à destination des grains ou de la poudre tapissant le fond du gobelet autour de ladite protubérance, voire formant dès que le niveau de liquide augmente un courant de forme spiralée.

Cette configuration ne permet cependant toujours pas d'éviter la formation des grumeaux, en particulier lorsque le produit est de la poudre de cacao car, le jet se brisant contre la protubérance centrale, l'eau n'a ensuite plus assez d'énergie pour les détruire.

Il a également été proposé que la tête de projection de l'eau placée au-dessus du gobelet soit entraînée en rotation pendant la projection d'eau.

C'est notamment le cas dans les brevets EP 0 373 126 et EP 1 155 646, qui décrivent des têtes rotatives dotées chacune de deux buses de projections équidistantes de l'axe de rotation. Dans le premier document cité, l'axe des buses est légèrement incliné, ce qui n'est pas le cas dans le second document.

Les jets d'eau, notamment lorsqu'ils sont sous pression, prennent alors une forme spiralée. Le mouvement rotatif a pour conséquence que chaque partie du fond du gobelet est destinataire de plusieurs jets successifs issus de chaque buse. Un grumeau peut ainsi être "attaqué" par plusieurs projections qui l'érodent progressivement par dilution de sa périphérie jusqu'à suppression.

Ainsi, la dynamique qui est donnée aux jets permet d'améliorer la dilution du produit pulvérulent lyophilisé, et empêche dans la plupart des cas la formation de grumeaux indésirables.

Ce n'est cependant vrai que pour la ou les zones du fond du gobelet touchées par les jets. Lorsque les deux buses sont équidistantes de l'axe de rotation et parallèles à lui (EP 1 155 646), seul un "anneau" de produit pulvérulent est en réalité affecté par les jets, qui visent chacun la même zone.

À cet égard, la solution présentée par le document EP 0 373 126 permet de couvrir une zone plus étendue, puisque les deux buses, certes équidistantes de l'axe de rotation, ne sont pas parallèles : l'une des deux, légèrement inclinée, permet d'augmenter l'épaisseur de l'anneau arrosé.

L'invention améliore encore cette configuration en ce qu'elle se caractérise par l'existence d'au moins une buse disposée selon ou à proximité immédiate de l'axe de rotation et au moins une buse excentrée radialement à distance dudit axe.

Le but est de couvrir au mieux, par le nombre, la répartition et l'orientation des buses, le fond du gobelet, afin que le but assigné à l'invention, à savoir diluer la matière pulvérulente, soit correctement rempli.

Les configurations sont multiples, et elles sont soigneusement étudiées pour être couplées avec des pressions qui peuvent être différentes pour chaque buse, en fonction de sa position, de son inclinaison, etc...

Ainsi, les buses peuvent par exemple être traversées par un même plan vertical contenant l'axe de rotation, et / ou au moins l'une d'elle peut être inclinée par rapport à la verticale, etc... Dans cette dernière hypothèse, selon une possibilité, si plusieurs buses sont prévues inclinées, les angles d'inclinaison augmentent de préférence à mesure de l'éloignement de l'axe de rotation. Ces angles sont généralement compris entre 1° et 40°, et de préférence entre 2° et 35°.

Pour l'orientation et la dynamique des jets, les choix des directions des buses et de leurs diamètres (débit du liquide projeté) sont importants au même titre que la pression de projection dont il sera discuté plus en détail ci-après.

Ainsi, selon l'invention, les diamètres des buses sont compris entre 0,2 mm et 1,2 mm, et de préférence entre 0,3 mm et 1 mm. De préférence, lesdits diamètres diminuent à mesure de l'éloignement de la buse par rapport à l'axe de rotation, de sorte que la pression augmente vers la périphérie.

Les variations que l'on peut apporter à la forme de la tête rotative, ainsi qu'au nombre, à l'orientation et à la capacité des buses permettent d'aboutir à un grand nombre de configurations qui entrent dans la portée de la présente invention.

Selon une possibilité, la tête de projection est d'allure cylindrique. Pour simplifier sa fabrication, elle est par exemple constituée d'une pièce simple en inox ou en laiton. Il est cependant également possible de prévoir une pièce intérieure en plastique alimentaire comportant les buses de projection, recouverte d'une enveloppe extérieure métallique.

Pour son entraînement, ladite tête de projection est par exemple couplée à un moteur rotatif via un système à poulies et courroie, lesquelles peuvent au surplus de préférence être crantées.

Selon une autre caractéristique avantageuse, le circuit hydraulique d'amenée d'eau chaude comporte, en amont de ladite tête, une électrovanne placée en aval d'une pompe lui envoyant de l'eau sous pression, et qui présente un débit contrôlé à double flux, avec un état ouvert pour l'envoi d'eau sous pression à la tête de projection, et un état à fuite contrôlée ne laissant passer qu'un faible débit d'eau à basse pression.

La configuration de la tête rotative n'est en effet pas tout : le débit et la pression des jets sont évidemment d'une importance également considérable pour aboutir à la destruction des grumeaux et à l'obtention éventuelle d'une mousse présentant une apparence correcte en fonction de la boisson. Ainsi, de préférence, dans l'état ouvert de la vanne, les jets sont projetés à une pression comprise entre 1 et 5 bars, de préférence entre 2,5 et 4,5 bars.

L'existence des deux états est mise à profit pour séquencer le fonctionnement de la tête : on peut ainsi envoyer des premiers jets d'une petite quantité d'eau afin d'humecter les grains lyophilisés avant de les mélanger / diluer dans l'eau en une phase ultérieure de projection. Les premiers jets peuvent être en basse pression et être suivis d'un remplissage à haute pression, ou l'inverse, ou encore être à la même pression que les jets ultérieurs.

Ce pré-mouillage, réalisant en quelque sorte une préparation du produit, est recommandé notamment pour la réalisation de café à partir de grains lyophilisés, avec des premiers jets de préférence à haute pression.

Lorsque l'électrovanne est dans son état à fuite contrôlée, la pression de l'eau délivrée est comprise entre 0,3 et 1 bar.

Cette faible pression s'explique par le fait que, dans nombres d'hypothèses, aucune dynamique particulière n'est requise pour les jets projetés à faible pression. Le but est souvent simplement de réaliser une pré-dilution dans une petite quantité de liquide, afin de faciliter le processus ultérieur de dissolution.

Suivant un autre avantage de l'invention, qui concerne toujours le circuit hydraulique de distribution d'eau, la pompe précitée est fixée au contact d'une paroi d'un chauffe-eau, l'eau chaude aspirée étant ensuite directement refoulée dans un serpentin disposé dans ledit réservoir.

Ce positionnement relatif de la pompe et du chauffe-eau est avantageux par rapport à des configurations classiques avec électrovanne disposée entre ces éléments en ce qu'il permet notamment de supprimer ladite électrovanne, source traditionnelle de fuites nécessitant des opérations de maintenance.

De plus, dans la configuration évoquée, l'eau chaude n'effectue qu'un trajet minimal hors dudit chauffe-eau avant d'être quasi-immédiatement réinjectée dans le serpentin et par conséquent maintenue à température puisque celui-ci se trouve dans le chauffe-eau. Dès lors, l'eau est chaude dès le premier gobelet de boisson de type thé ou café.

Plus généralement, la structure de l'invention permet d'ailleurs de garantir dans tous les cas que la température des boissons chaudes soit optimalement préservée, en réduisant autant que possible les portions de circuit hydraulique circulant à l'air libre. Le circuit est ainsi conçu pour minimiser les longueurs des tuyauteries / tubulures raccordant les composants hydrauliques.

Selon l'invention, il est prévu que l'électrovanne à débit contrôlé à double flux soit placée au-dessus du chauffe-eau.

Enfin, selon un autre avantage encore, le chauffe-eau est localisé en partie basse de la machine de distribution de l'invention, ce qui permet d'éviter que d'éventuelles fuites n'endommagent le circuit électrique ou d'autres éléments du système.

La machine de l'invention permet évidemment également de fournir des boissons froides du type jus de fruits. La tête de projection peut par conséquent être alimentée, outre par une conduite d'eau chaude issue de l'électrovanne, par une conduite d'eau froide. Les deux conduites se rejoignent alors en amont de la tête de projection multi-jet.

L'invention va à présent être décrite en détail, en référence aux figures annexées, pour lesquelles :
- La figure 1 représente un schéma simplifié du circuit hydraulique de la machine de l'invention ;
- la figure 2 est une vue en perspective d'une platine portant d'une part la tête de projection multi-jet, et d'autre part le moteur qui l'entraîne en rotation ;
- la figure 3 est une vue en perspective des mêmes éléments que ceux qui apparaissent en figure 1, présentés sous un angle différent ;
- la figure 4 est une vue en coupe axiale de la représentation des figures 2 et 3 ;
- les figures 5 à 8 sont des coupes axiales de configurations possibles de la tête de projection ; et
- la figure 9 est une vue de dessus de la configuration présentée en figure 8.

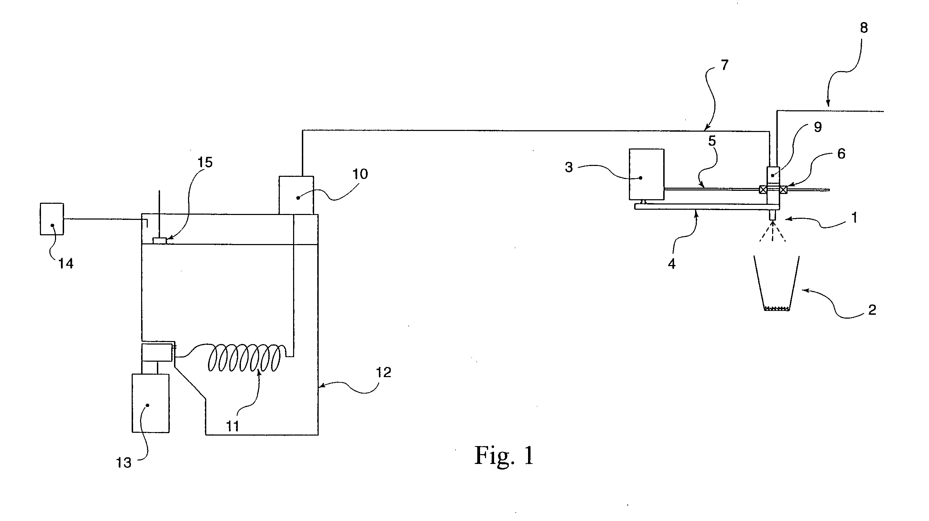

En référence à la figure 1, la tête rotative (1) de projection de liquide se trouve disposée au-dessus du gobelet (2), dans lequel elle projette du liquide sous pression. Cette tête est entraînée en rotation par un moteur électrique (3), via un système à poulies et courroie (4). La tête rotative (1) est fixée à une platine (5) (à laquelle est également solidarisé le moteur (3)) via un roulement à billes (6).

La tête rotative (1) est alimentée d'une part par une tubulure (7) d'arrivée d'eau chaude, et d'autre part par une tubulure (8) d'arrivée d'eau froide. Lesdites tubulures sont connectées à une partie fixe (9) surmontant un corps rotatif incluant la tête (1).

La tubulure (7) véhiculant l'eau chaude est issue d'une électrovanne (10) à deux états, un état ouvert et un état dit à fuite contrôlée ne laissant passer qu'une quantité minimale de liquide sous une faible pression. L'entrée de l'électrovanne (10) est elle-même connectée à la sortie d'un serpentin (11) immergé dans l'eau chaude d'un chauffe-eau (12) et permettant de maintenir à température l'eau pompée dans ledit chauffe-eau (12) par la pompe (13).

D'une manière connue en soi, le chauffe-eau est alimenté en eau via une électrovanne (14) asservie à un flotteur (15) chargé de détecter le niveau d'eau à l'intérieur du chauffe-eau (12).

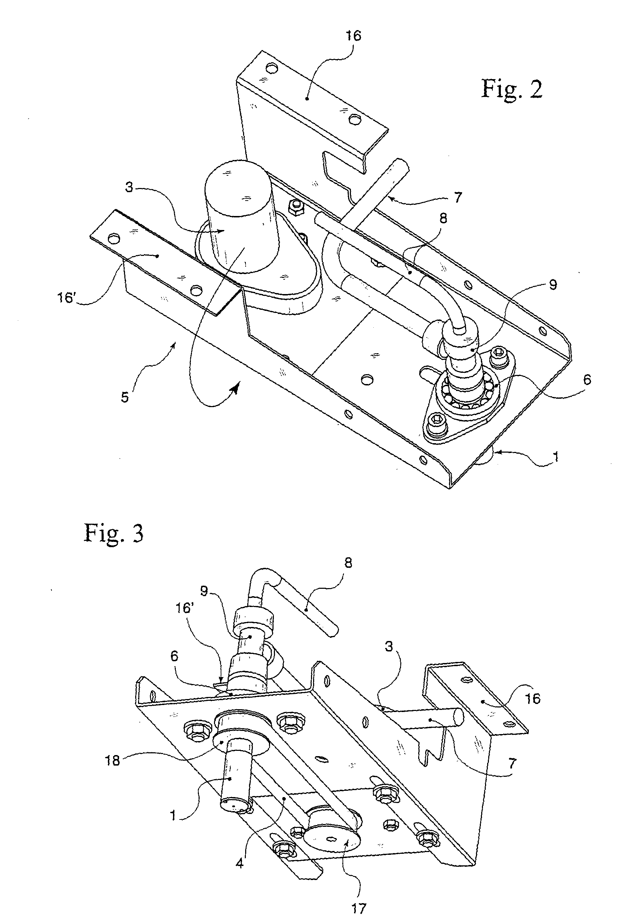

Pour faciliter le montage de la machine de l'invention, un certain nombre de ses composants sont regroupés en sous-ensembles. C'est le cas notamment pour la tête rotative (1) et le moteur (3) qui entraîne sa rotation, qui sont comme on l'a mentionné regroupés sur la platine (5). La forme de celle-ci apparaît mieux en figures 2 et 3, qui montrent une configuration de montage possible de ces éléments.

Le moteur (3) et le roulement à billes (6) sont montés sur une plaque commune de ladite platine (5), au-dessus de laquelle se trouve notamment l'élément fixe (9) coaxial à la tête rotative (1), auquel sont connectées l'arrivée d'eau chaude (7) et l'arrivée d'eau froide (8).

La platine (5) comporte de plus deux rebords latéraux (16, 16') permettant sa fixation à un bâti de la machine, par exemple classiquement au moyen de vis / écrous.

La figure 3 illustre plus clairement la forme de la tête rotative (1), qui est d'allure sensiblement cylindrique, munie de buses sur sa paroi radiale inférieure. Le système à poulies / courroie (4), également plus clairement identifié dans la figure 3, comporte une première poulie (17) disposée sur l'arbre du moteur (3) et reliée via ladite courroie (4) à une poulie (18) coaxiale à la tête rotative (1).

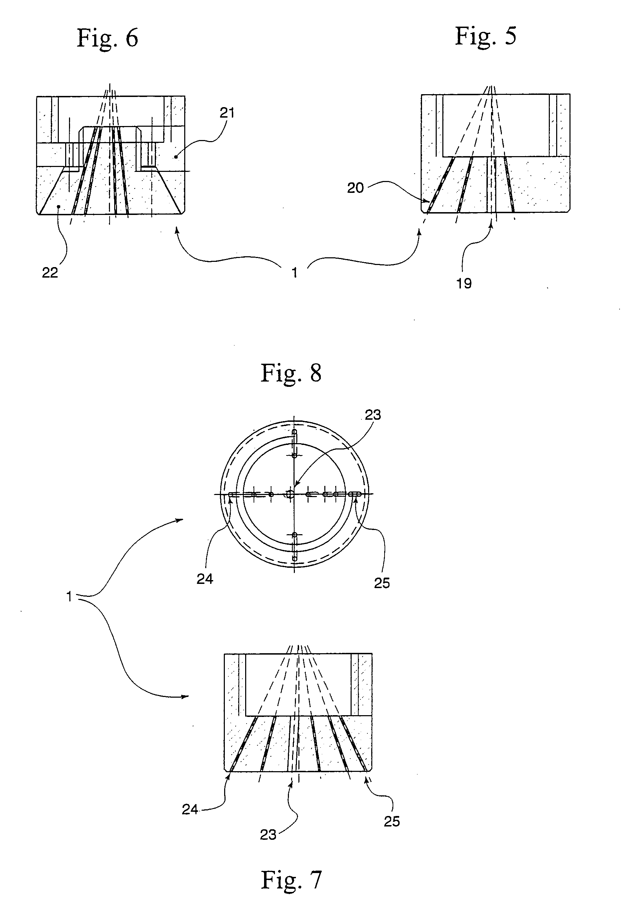

Dans la configuration représentée, la tête rotative (1) de projection de liquide ne comporte que trois buses, une buse centrale et deux buses périphériques. Il ne s'agit bien entendu que d'un exemple possible, d'autres buses pouvant être ajoutées aux trois illustrées, ainsi que cela apparaît notamment dans les figures 5 à 9.

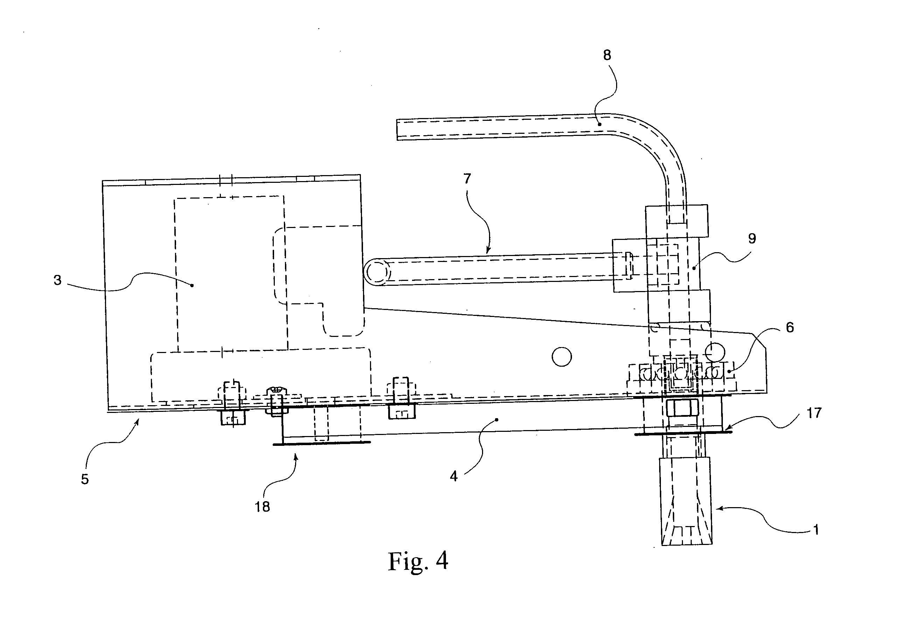

De préférence, lesdites buses périphériques sont orientées en biais. La figure 4 permet de voir la partie finale du circuit hydraulique, qui débouche dans la tête rotative (1). Elle intègre également les détails de construction de la structure présentée, détails qui sont bien entendu susceptibles d'être modifiés sans changer l'esprit de l'invention. Ainsi, les poulies et la courroie sont de préférence crantées, bien que cela ne soit pas une obligation fonctionnelle.

En référence à la figure 5, la tête (1) de projection représentée ne comporte que quatre buses orientées suivant quatre angles différents par rapport à la verticale, et dont les diamètres sont également chacun différents. Ainsi, à titre d'exemple, la buse centrale (19) présente un angle de 2° par rapport à la verticale, et son diamètre est de 1 mm.

Les diamètres étant décroissants à mesure que les angles augmentent, le diamètre de la buse (20), qui fait un angle de 24° avec la verticale, n'est plus que de 0,3 mm. Les buses sont toutes situées dans le même plan vertical passant par l'axe de rotation.

Dans la configuration de la figure 6, la tête de projection (1) est constituée d'une enveloppe externe (21) en laiton, à l'intérieur de laquelle se trouve une pièce interne (22) en plastique alimentaire. La disposition des buses ne présente pas plus de symétrie que dans la figure précédente.

L'existence de la pièce interne (22) permet de simplifier la fabrication, puisque les perçages sont effectués directement dans le plastique alimentaire.

La configuration apparaissant en figures 7 et 8 comporte, à l'inverse de celles des figures 5 et 6, des buses réparties sur deux plans perpendiculaires (voir figure 8). Les diamètres diminuent au fur et à mesure que les angles augmentent, et la buse centrale (23) située à 2,4° de la verticale, présente un diamètre de 1 mm, alors que les buses (24, 25) d'extrémité, qui ont un diamètre de 0,4 mm présentent une inclinaison de 24°.

D'une manière générale, la description ci-dessus concerne des exemples possibles de l'invention, qui ne sont nullement exhaustifs de celle-ci. L'invention englobe au contraire toutes les variantes de forme et de configuration qui sont à la portée de l'homme de l'art.

## Revendications

1. Machine pour la fabrication de boissons à partir de poudre ou de grains lyophilisés disposés dans le fond d'un gobelet (2) et dilués dans de l'eau projetée par une tête (1) de projection de jets d'eau placée au-dessus du gobelet (2), ladite tête (1) comportant des buses (19, 20, 23, 24, 25) de projection d'eau et étant entraînée en rotation pendant ladite projection, **caractérisée en ce que** la tête (1) comporte au moins une buse (19, 23) disposée selon ou à proximité immédiate de l'axe de rotation et au moins une buse (20, 24, 25) excentrée radialement à distance dudit axe.

2. Machine pour la fabrication de boissons selon la revendication précédente, **caractérisée en ce que** les buses (19, 20 ; 23, 24, 25) sont traversées par un plan vertical contenant l'axe de rotation.

3. Machine pour la fabrication de boissons selon l'une des revendications précédentes, **caractérisée en ce qu'**au moins une buse (19, 20 ; 23, 24, 25) est inclinée par rapport à la verticale.

4. Machine pour la fabrication de boissons selon la revendication précédente, **caractérisée en ce que** les angles d'inclinaison augmentent à mesure de l'éloignement de l'axe de rotation.

5. Machine pour la fabrication de boissons selon la revendication précédente, **caractérisée en ce que** les angles d'inclinaison sont compris entre 1° et 40°, et de préférence entre 2° et 35°.

6. Machine pour la fabrication de boissons selon l'une quelconque des revendications précédentes, **caractérisée en ce que** les diamètres des buses (19, 20 ; 23, 24, 25) sont compris entre 0,2 mm et 1,2 mm, et de préférence entre 0,3 mm et 1 mm.

7. Machine pour la fabrication de boissons selon la revendication précédente, **caractérisée en ce que** les diamètres des buses (19, 20 ; 23, 24, 25) diminuent à mesure de leur éloignement de l'axe de rotation.

8. Machine pour la fabrication de boissons selon l'une quelconque des revendications précédentes, **caractérisée en ce que** la tête de projection (1) est d'allure cylindrique.

9. Machine pour la fabrication de boissons selon l'une des revendications précédentes, **caractérisée en ce que** la tête de projection (1) est constituée d'une pièce en inox ou en laiton.

10. Machine pour la fabrication de boissons selon l'une quelconque des revendications précédentes, **caractérisée en ce que** la tête de projection (1) est couplée à un moteur (3) rotatif via un système (4) à poulies et courroie.

11. Machine pour la fabrication de boissons selon la revendication précédente, **caractérisée en ce que** les poulies et la courroie sont crantées.

12. Machine pour la fabrication de boissons selon l'une quelconque des revendications précédentes, **caractérisée en ce que** le circuit hydraulique d'amenée d'eau chaude comporte, en amont de ladite tête (1), une électrovanne (10) placée en aval d'une pompe (13) lui envoyant de l'eau sous pression, et qui présente un débit contrôlé à double flux, avec un état ouvert pour l'envoi d'eau sous pression à la tête de projection (1), et un état à fuite contrôlée ne laissant passer qu'un faible débit d'eau à basse pression.

13. Machine pour la fabrication de boissons selon la revendication précédente, **caractérisée en ce que** la pompe (13) envoie de l'eau à une pression comprise entre 1 et 5 bars, de préférence entre 2,5 et 4,5 bars.

14. Machine pour la fabrication de boissons selon l'une des revendications 12 et 13, **caractérisée en ce que** lorsque l'électrovanne (10) est dans son état à fuite contrôlée, la pression de l'eau en aval est comprise entre 0,3 et 1 bar.

15. Machine pour la fabrication de boissons selon l'une quelconque des revendications 12 à 14, **caractérisée en ce que** la pompe (13) est fixée au contact de la paroi d'un chauffe-eau (12), l'eau chaude aspirée étant ensuite directement refoulée dans un serpentin (11) disposé dans le réservoir du chauffe-eau (12).

16. Machine pour la fabrication de boissons selon la revendication précédente, **caractérisée en ce que** l'électrovanne (10) à débit contrôlé à double flux est placée au-dessus du chauffe-eau (12).

17. Machine pour la fabrication de boissons selon l'une quelconque des revendications précédentes, **caractérisée en ce que** la tête de projection (1) est alimentée par une conduite d'eau chaude (7) issue de l'électrovanne (10) et par une conduite d'eau froide (8).

18. Machine pour la fabrication de boissons selon l'une quelconque des revendications 14 à 17, **caractérisée en ce que** le chauffe-eau (12) est localisé en partie basse de ladite machine.
